Europäisches Patentamt

European Patent Office

Office européen des brevets

(11) Veröffentlichungsnummer: **0 288 601**

**A2**

## (12) EUROPÄISCHE PATENTANMELDUNG

(21) Anmeldenummer: **87114180.0**

(22) Anmeldetag: **29.09.87**

(51) Int. Cl.⁴: **G01D 5/248**

(30) Priorität: **25.04.87 DE 3713956**

(43) Veröffentlichungstag der Anmeldung:
**02.11.88 Patentblatt 88/44**

(84) Benannte Vertragsstaaten:
**CH DE FR GB IT LI NL**

(71) Anmelder: **W.C. Heraeus GmbH**
**Heraeusstrasse 12 - 14**
**D-6450 Hanau / Main(DE)**

(72) Erfinder: **Ziegler, Horst, Prof. Dr.**
**Steinhauser Weg 13**
**D-4790 Paderborn(DE)**

(74) Vertreter: **Heinen, Gerhard, Dr.**
**Heraeus Holding GmbH Heraeusstrasse**
**12-14**
**D-6450 Hanau am Main(DE)**

(54) **Fühleinheit.**

(57) Zur Herabsetzung der Empfindlichkeit eines ein frequenzmoduliertes Signal bereitstellenden Fühlelementes (30) ohne Eingriff in den eigentlichen Sensor (32) wird vorgeschlagen, die Ausgangsimpulse des Fühlelementes (30) mit Impulsen konstanter Frequenz zu "verdünnen". Bei einer Fühleinheit, die nach Erhalt eines Startimpulses jeweils einen oder mehrere Meßimpulse bereitstellt, wird dies dadurch bewerkstelligt, daß man einen Teil der Impuls-Periode durch eine Zeitstufe (44) vorgibt, die in Abhängigkeit von einem frequenzkonstanten Hilfsoszillator (46) arbeitet. Deren Ausgangssignal schaltet eine Torschaltung (36) durch, die zwischen das Fühlelement (30) und einen nachfolgenden Frequenzteiler (38 bis 42) eingefügt ist, welcher den Meßimpuls bereitstellt.

Fig. 4

Xerox Copy Centre

## Fühleinheit

Die Erfindung betrifft eine Fühleinheit gemäß dem Oberbegriff des Anspruches 1.

Eine derartige Fühleinheit ist in der DE-PS 31 28 706 beschrieben. Sie ist speziell dazu ausgebildet, mit mehreren ähnlich aufgebauten Fühleinheiten an eine gemeinsame Signalschiene angeschlossen zu werden, die mit einer Steuerungs/Auswerteeinheit verbunden ist. Gibt die Steuerungs/Auswerteeinheit einen einen Meßzyklus einleitenden Startimpuls auf die Signalschiene, so stellen die verschiedenen Fühleinheiten Meßimpulse auf der Datenschiene bereit, deren zeitlicher Abstand der bei der jeweiligen Fühleinheit zu erfassenden Meßgröße zugeordnet ist, wobei zugleich die verschiedenen Fühleinheiten unterschiedlich eingestellte Verzögerungskreise aufweisen, damit von den verschiedenen Fühleinheiten bereitgestellten Meßimpulse ineinander verschachtelt sind, das Ganze derart, daß keine Überlappung von Meßimpulsen entsteht. Typischerweise enthalten derartige bekannte Fühleinheiten als Fühlelement einen auf Temperaturgang seiner Schwingungsfrequenz geschnittenen Schwingquarz, und da der Temperaturgang auch derartiger Schwingquarze in der Regel klein ist, arbeitet man mit großem zeitlichem Grundabstand zwischen den Meßimpulsen, damit die Auswertung der Meßimpulslage mit nicht allzu großer zeitlicher Auflösung unter Verwendung billiger Schaltelemente erfolgen kann.

Für manche Anwendungsfälle ist es notwendig, neben derartigen Fühleinheiten, bei denen sich die Absolutlage der Meßimpulse zum Startimpuls mit der zu erfassenden Meßgröße nur geringfügig ändert, auch solche Fühleinheiten an die gemeinsame Signalschiene anzuschließen, welche von Hause aus eine starke Abhängigkeit der Meßimpulslage von der zu erfassenden Größe aufweisen. Es sind dies insbesondere Fühl einheiten, bei denen das eigentliche Fühlelement einen veränderlichen elektrischen Widerstand mit nachgeschaltetem Spannungs/Frequenzwandler, eine Tauchspule mit zugeordneter Brückenschaltung und Spannungs/Frequenzwandler für die am Nullzweig der Brücke anliegende Spannung oder ähnliche Meßwertgeber aufweist. Damit man auch bei Verwendung derartiger Fühleinheiten Überlappungen von Meßimpulsen mit Sicherheit ausschließen kann, müßten die Fenster in der Zeitskala, innerhalb welcher sich die Lage eines Meßimpulses einer betrachteten Fühleinheit innerhalb des Meßbereiches der zu erfassenden Meßgröße ändern kann, alle sehr groß gewählt werden. Bei vorgegebener Länge des Meßzyklus (Abfrage sämtlicher an die Signalschiene angeschlossener Fühleinheiten) könnte somit nur eine verhältnismäßig kleine Anzahl von Fühleinheiten an die Datenschiene angeschlossen werden. Oder anders gesagt: bei vorgegebener Anzahl an eine Signalschiene anzuschließender Fühleinheiten wächst dann die Gesamtlänge eines Meßzyklus direkt mit der Größe des Fensters, innerhalb dessen sich die Lage eines Meßimpulses ändern kann.

Für manche Anwendungsfälle, in denen eine Fühleinheit mit starkem Frequenzgang in Abhängigkeit von der Meßgröße zusammen mit Fühleinheiten mit schwachem Frequenzgang der Meßimpulse in Abhängigkeit von der zu erfassenden Meßgröße an eine gemeinsame Signalschiene anzuschließen sind, wird die große Genauigkeit der Messung, welche eine stark frequenzabhängig arbeitende Fühleinheit ermöglicht, gar nicht benötigt. In diesem Falle könnte man daran denken, den Schwankungsbereich in der Lage des Meßimpulses dadurch zu vermindern, daß man die Empfindlichkeit des analog arbeitenden Teiles des Fühlelementes herabsetzt. Dies ist aber deshalb zuweilen nachteilig, weil man mit der generellen Herabsetzung der Empfindlichkeit des Fühlelementes in dessen analogem Teil eine Verschlechterung des Signal/Rausch-Verhältnisses in Kauf nehmen muß, oft auch in einen nichtlinearen Anfangsbereich der Fühlerkennlinie gelangt.

Durch die vorliegende Erfindung soll daher eine Fühleinheit gemäß dem Oberbegriff des Anspruches 1 so weitergebildet werden, daß die meßgrößenabhängige Schwankung in der Lage des Meßimpulses, also die Empfindlichkeit, vermindert ist, ohne daß die Empfindlichkeit des auf die Meßgröße ansprechenden eigentlichen Sensors modifiziert werden muß.

Diese Aufgabe ist erfindungsgemäß gelöst durch eine Fühleinheit gemäß Anspruch 1.

Bei der erfindungsgemäßen Fühleinheit wird die Empfindlichkeit grob gesprochen dadurch herabgesetzt, daß man den Einfluß des eigentlichen Fühlelementes auf die Lage des Meßimpulses abschwächt oder "verwässert", indem man bei der Erzeugung des Meßimpulses neben den frequenzabhängigen Fühlelement-Ausgangsimpulsen zusätzlich "Verdünnungs"-Impulse mit konstanter Frequenz verwendet. Es sind somit im eigentlichen Fühlelement keine Eingriffe notwendig; der Grundcharakter der Fühlelement-Kennlinie bleibt erhalten, und die Abschwächung der effektiven Empfindlichkeit der Fühleinheit läßt sich in sehr weiten Grenzen linear bewerkstelligen.

Die Abschwächung des Einflusses der Frequenz der Fühlelement-Ausgangsimpulse auf die Bildung des Meßimpulses läßt sich in der Praxis auf zweierlei Art und Weise bewerkstelligen:

Gemäß Anspruch 2 setzt sich die Zeit zwischen Startimpuls und Abgabe eines Meßimpulses aus einer fixen, nicht von der Meßgröße abhängigen Zeit und der zur Abgabe einer geringeren Anzahl von Fühlelement-Ausgangsimpulsen benötigten Zeit zusammen, wodurch erreicht wird, daß man mit einer kleineren Anzahl von Fühlelement-Ausgangsimpulsen in das für die betrachtete Fühleinheit vorgesehene Zeitfenster kommt. Wegen der geringeren Anzahl hierzu verwendeter Fühlelement Ausgangsimpulse ist auch der Schwankungsbereich in der Lage des Meßimpulses entsprechend kleiner.

Gemäß Anspruch 7 kann man stattdessen die in ihrer Frequenz von der Meßgröße abhängigen Fühlelement-Ausgangsimpulse laufend durch Impulse konstanter Frequenz im Effekt verdünnen, wobei beide Impulsarten gleichermaßen auf einen Frequenzteiler gegeben werden, dessen Teilverhältnis gemäß der Frequenz des die Verdünnungs-Impulse abgebenden Kalibrier-Oszillators erhöht wird. Auch so erreicht man, daß man mit prozentual kleinerem Beitrag von Fühlelement-Ausgangsimpulsen innerhalb eines vorgegebenen Fensters einen Meßimpuls erzeugt.

Mit der Weiterbildung der Erfindung gemäß Anspruch 3 wird bei der ersten Alternative der Empfindlichkeitsverminderung gewährleistet, daß sich die feste erste Zeitspanne sehr fein un genau einstellen läßt und auch reproduzierbar präzise eingehalten wird.

Die Weiterbildungen der Erfindung gemäß den Ansprüchen 5 und 8 erlauben durch Betätigen eines einzigen einstellbaren Teiles die Herabsetzung der Empfindlichkeit der Fühleinheit, wobei automatisch gewährleistet ist, daß der Meßimpuls in ein vorgegebenes Zeitfenster fällt.

Nachstehend wird die Erfindung anhand von Ausführungsbeispielen unter Bezugnahme auf die Zeichnung näher erläutert. In dieser zeigen:

Figur 1: ein Blockschaltbild einer Meßanlage mit einer Mehrzahl mit einer Signalschiene verbundener Fühleinheiten;

Figur 2: ein Blockschaltbild einer der Fühleinheiten der in Figur 1 gezeigten Anlage;

Figur 3: einen Ausschnitt aus dem Spannungsverlauf auf der Signalschiene der Anlage nach Figur 1;

Figur 4: das Blockschaltbild des eigentlichen Fühlers der in Figur 2 gezeigten Fühleinheit;

Figur 5: das Blockschaltbild eines abgewandelten Fühlers zur Verwendung in der Fühleinheit gemäß Figur 2; und

Figur 6: das Blockschaltbild eines Verzögerungsgliedes der in Figur 2 gezeigten Fühleinheit.

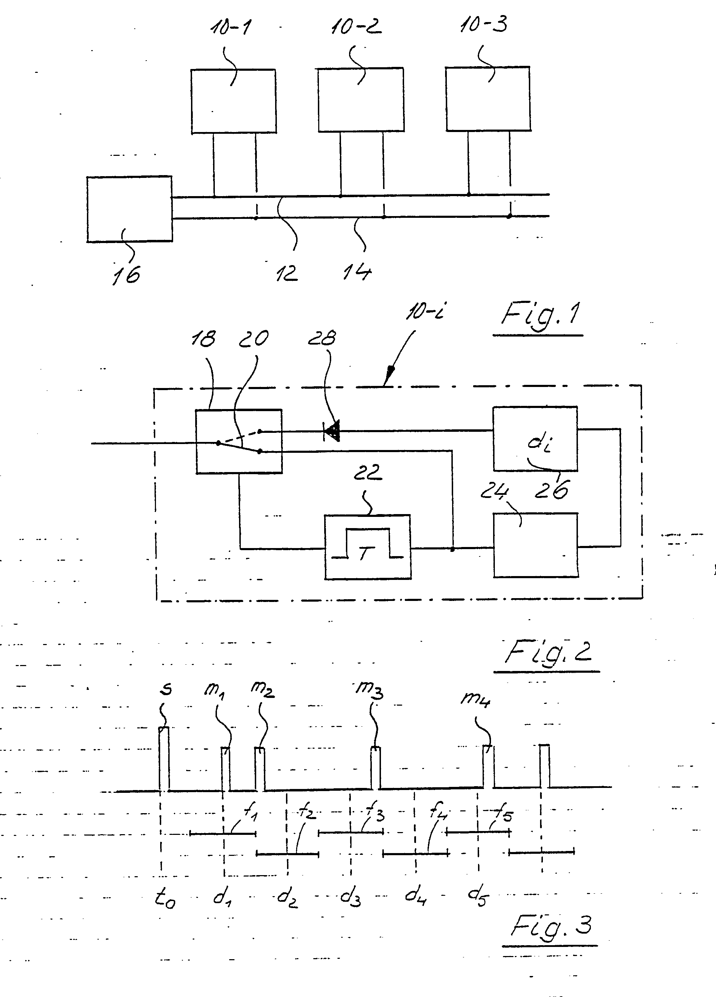

Figur 1 zeigt eine Meßanlage, bei welcher drei insgesamt mit 10-1, 10-2 und 10-3 bezeichnete Fühleinheiten sowie weitere, in der Zeichnung nicht dargestellte Fühleinheiten an eine gemeinsame Signalschiene angeschlossen sind, welche die Leiter 12, 14 umfaßt. An die Leiter 12, 14 ist ferner eine Steuer/Auswerteeinheit 16 angeschlossen, die auf die Leiter 12, 14 das Arbeiten der Fühleinheiten 10-i steuernde Impulse gibt und von den Leitern 12, 14 Meßimpulse übernimmt, welche die Fühleinheiten 10-i zeitversetzt, also ineinandergeschachtelt auf die Leiter 12, 14 abgeben. Dabei ist die Phasenlage dieser Meßimpulse bezüglich eines von der Steuer/Auswerteeinheit abgegebenen Meßzyklus-Start-impulses oder auch der zeitliche Abstand aufeinanderfolgender Meßimpulse, die von derselben Fühleinheit abgegeben erden, ein Maß für die von der jeweiligen Fühleinheit żu erfassende Meßgröße.

Zunächst sei angenommen, daß der Abstand zwischen dem jeweils ersten von einer Fühleinheit erzeugten Meßimpuls und und dem Startimpuls das Maß für die von einer betrachteten Fühleinheit erfaßte Meßgröße ist.

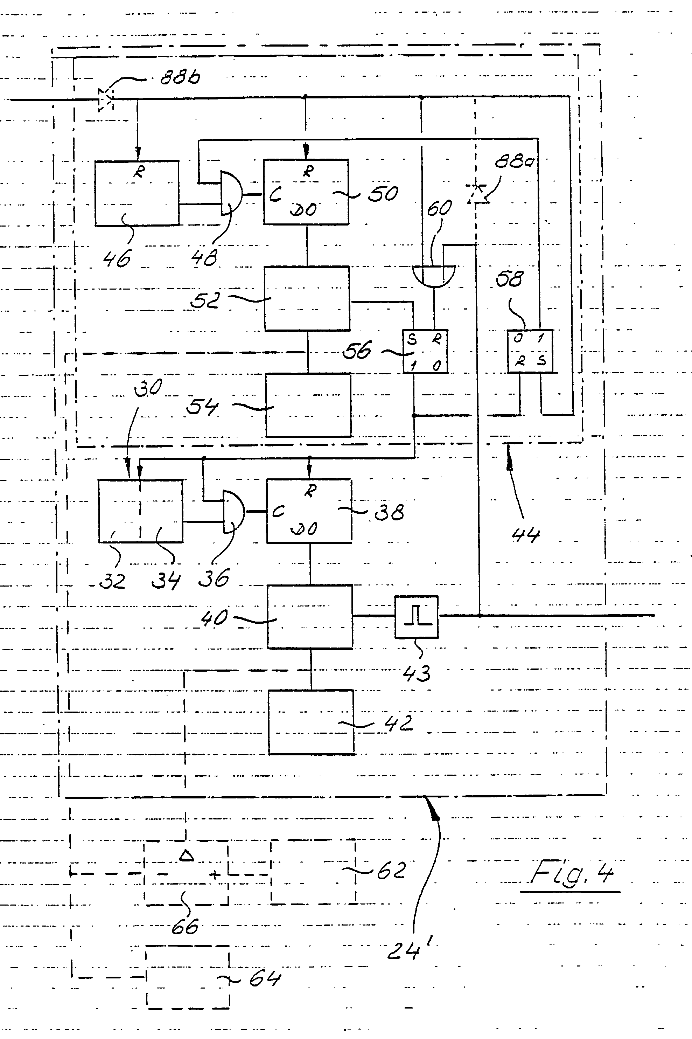

Wie aus Figur 2 ersichtlich, hat jede der Fühleinheiten 10-i eine Sende/Empfangsweiche 18, die schematisch als Um schalter wiedergegeben ist. Beim Einschalten der Meßanlage und nach Ablauf jedes Meßzyklus steht die Schaltbrücke 20 der Weiche 18 in der in Figur 2 ausgezogen wiedergebenen Stellung, so daß ein von der Steuer/Auswerteeinheit 16 abgegebener Startimpuls zum Einleiten eines Meßzyklus auf den Eingang einer monostabilen Kippstufe 22 gelangt. Diese erzeugt einen Impuls der Länge T (Länge des Meßzyklus), durch welchen die Schaltbrücke 20 in die in Figur 2 gestrichelt angedeutete Stellung gebracht wird. Damit kann die monostabile Kippstufe 22 nach Einleitung eines Meßzyklus nicht mehr durch auf der Signalschiene übermittelte Impulse neu angestoßen werden.

Ein von der Steuer-Auswerteeinheit 16 erzeugter Startimpuls gelangt nicht nur auf die monostabile Kippstufe 22 sondern gleichzeitig auch auf einen insgesamt mit 24 bezeichneten Fühler, der ein auf eine Meßgröße ansprechendes Fühlelement sowie verschiedene elektrische Schaltkreise aufweist, wie nachstehend noch genauer beschrieben werden wird. Grob gesprochen arbeitet der Fühler 24 so, daß er nach Erhalt eines Startimpulses einen einzigen Meßimpuls bereitstellt, dessen Abstand vom Startimpuls ein Maß für die zu erfassende Meßgröße ist. Der Meßimpuls wird durch ein Verzögerungsglied 26 um eine Zeit $d_i$ verzögert, die eine für jede Fühleinheit 10-i charakteristische Zeit ist. Auf diese Weise wird vermieden, daß unterschiedliche Fühleinheiten zur gleichen Zeit ihre Meßimpulse auf die Signalschiene abgeben.

Der vom Verzögerungsglied 26 um die charakteristische Zeit $d_i$ verzögerte Meßimpuls gelangt über eine Diode 28 und die Schaltbrücke 20 auf die Signalschiene und kann so von der Steuer-Auswerteeinheit 16 empfangen und bezüglich seiner Lage zum Startimpuls ausgewertet werden. Leitungsbedingte Anteile in der Signalverzögerung können dabei durch Korrektursignale kompensiert werden, die zuvor durch eine Eichmessung ermittelt worden sind.

Durch den oben beschriebenen Aufbau der Fühleinheiten 10-i ist gewährleistet, daß diese in jedem Meßzyklus genau einen Meßimpuls abgeben, wobei die einzelnen Meßimpuls $m_i$ zeitlich ineinander verschachtelt sind, wie im einzelnen in Figur 3 gezeigt. Dort ist mit s der von der Steuer-/Auswerteeinheit zum Zeitpunkt $t_0$ abgebene Startimpuls bezeichnet. $m_1$, $m_2$ usw. sind die von den Fühleinheiten 10-1, 10-2 usw. abgegebenen Meßimpulse, die dann, wenn die zu erfassenden Meßgrößen bei der Mitte des jeweiligen Meßbereiches lägen, zu den Zeitpunkten $t_0 + d_i$ abgegeben würden. Nachdem aber die verschiedenen Meßgrößen zu einem betrachteten Zeitpunkt in der Praxis einen von der Mitte des Meßbereiches unterschiedlichen Wert haben, werden auch die Meßimpulse $m_1$, $m_2$ usw. in der Regel nicht exakt zu den Zeitpunkten $t_0 + d_1$, $t_0 + d_2$ usw. abgegeben, schwanken in ihrer Lage vielmehr um diese Zeitpunkte. Verteilt man die innerhalb eines Meßzyklus zur Verfügung stehende Zeit gleichmäßig auf die verschiedenen Fühleinheiten 10-i, so daß gilt d i = i x d, so darf jeder der Meßimpulse $m_i$ innerhalb eines Fensters $f_i$ schwanken, dessen Mitte bei dem Zeitpunkt $t_0 + d_i$ liegt und dessen Breite gleich d ist. Unter den in Figur 3 gezeigten Verhältnissen erzeugt die Fühleinheit 10-1 ihren Meßimpuls $m_1$ bei der Mitte des Fensters $f_1$, während der Meßimpuls $m_2$ von der Fühleinheit 10-2 zu Beginn des Fensters $f_2$ abgegeben wird und der Meßimpuls $m_3$ am hinteren Ende des Fensters $f_3$ liegt.

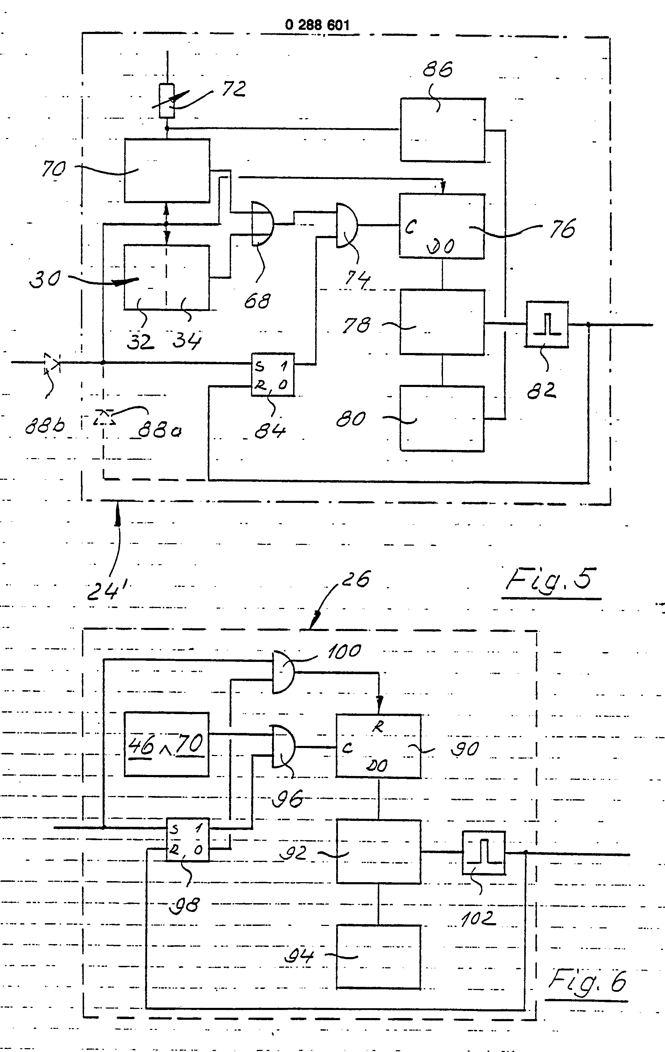

Hätte man nun eine Fühleinheit 10-4, welche aufgrund einer hohen Empfindlichkeit des eigentlichen Fühlelementes einen sehr starken Schwankungsbereich von ihr abgegebener Meßimpulse $m_4$ hätte, so könnte es vorkommen, daß ein Meßimpuls $m_4$ außerhalb des Fensters $f_4$ mit der Standardgröße d liegt, welche im Hinblick auf den Schwankungsbereich der überwiegend an die Leiter 12, 14 angeschlossenen Typen von Fühleinheiten gewählt wurde. In Figur 3 fiele dann der Meßimpuls $m_4$ in das Fenster $f_5$ und würde so von der Steuer/Auswerte einheit 16 einer falschen Fühleinheit und einem falschen Meßwert zugeordnet werden. Es ist somit notwendig, daß die Empfindlichkeit der Fühleinheit 10-4 so abgeschwächt wird, daß im ganzen zu erfassenden Bereich der zugeordneten Meßgröße das Fenster $f_4$ nie überschritten wird. Einzelheiten entsprechend ausgebildeter Fühler werden nachstehend unter Bezugnahme auf die Figuren 4 und 5 erläutert.

Der in Figur 4 wiedergegebene Fühler 24 hat ein Fühlelement 30, welches aus einem Sensor 32 und einem Umsetzer 34 besteht, der das Ausgangssignal des Sensors 32, welches in der Regel amplitudenmoduliert ist, in eine Impulsfolge umsetzt, deren Frequenz dem Istwert der Meßgröße entspricht. Die vom Umsetzer 34 bereitgestellten Impulse gelangen über ein UND-Glied 36 auf die Zählklemme C eines digitalen Zählers 38. Die Datenausgangsklemmen DO des Zählers 38 sind mit den einen Eingangsklemmen eines Komparators 40 verbunden. Dessen zweite Eingangsklemmen sind von einem Festwertspeicher 42 her beaufschlagt. Der Zähler 38 bildet so zusammen mit dem Komparator 40 und dem Festwertspeicher 42 einen Frequenzteiler, dessen Teilverhältnis durch den Inhalt des Festwertspeichers 42 vorgebbar ist. Am Ausgang des Komparators 40 erhält man somit ein niederfrequentes Signal, zu einem Zeitpunkt, der ebenso wie die Frequenz der vom Fühlelement 30 abgegebenen Impulse dem Istwert der Meßgröße zugeordnet ist.

Durch dieses Signal wird ein schneller monostabiler Multivibrator 43 angestoßen, dessen Ausgangsimpuls den Meßimpuls $m_i$ darstellt.

Der zweite Eingang des UND-Gliedes 36 wird vom Ausgang einer monostabilen Kippstufe 44 her durchgesteuert, deren Eingang das über die Schaltbrücke 20 zugeführte Startsignal der Steuer/Auswerteeinheit 16 erhält.

Zu der monostabilen Kippstufe 44 gehört ein freilaufender, mit fester Frequenz arbeitender Oszillator 46, dessen Taktimpulse über ein UND-Glied 48 auf die Zählklemme C eines Hilfszählers 50 gegeben werden. Die Datenausgangsklemmen DO des Hilfszählers 50 sind mit den einen Eingängen eines Hilfskomparators 52 verbunden, der außerdem das Ausgangssignal eines Hilfs-Festwertspeichers 54 erhält. Die Schaltkreise 50 bis 54 bilden somit wieder einen Frequenzteiler mit durch den Inhalt des Hilfs-Festwertspeichers 54 vorgebbarem Teilverhältnis.

Durch das Ausgangssignal des Hilfskomparators 52 wird eine bistabile Kippschaltung 56 gesetzt, deren "1"-Ausgang das Durchschaltsignal für das UND-Glied 36 bereitstellt. Das "1"-Ausgangssignal der bistabilen Kippschaltung 56 dient ferner zum Rücksetzen einer weiteren bistabilen Kippschaltung 58, deren "1"-Ausgangssignal zum Durchschalten des UND-Gliedes 48 dient. Das Setzen der bistabilen Kippschaltung 58, das Rücksetzen der bistabilen Kippschaltung 56 (über ein ODER-Glied 60), das Rückstellen des Hilfszählers 50 und das Rückstellen eines im Oszillator 46 enthaltenen Vorteilers (Phasensynchronisierung) erfolgt durch den von der Steuer/Auswerteeinheit 16 her überstellten Startimpuls s. Um zu gewährleisten, daß der Fühler 24 für jeden erhaltenen Startimpuls nur einen einzigen Meßimpuls bereitstellt, wird das Ausgangssignal des Fühlers 24 über das ODER-Glied 60 ebenfalls zum Rückstellen der bistabilen Kippschaltung 56 verwendet.

Der in Figur 4 gezeigte Fühler arbeitet grob gesprochen folgendermaßen: Nach Erhalt eines Startimpulses bleibt das "1"-Ausgangssignal der bistabilen Kippschaltung 56 noch solange niederpegelig, bis der Stand des Hilfszählers 50 dem Inhalt des Hilfs-Festwertspeichers 54 entspricht. Diese Zeitspanne ist fix, unabhängig vom Istwert der zu erfassenden Meßgröße. Sowie das "1"-Ausgangssignal der bistabilen Kippschaltung 56 hochpegelig wird, wird der Zähler 38 zurückgestellt, die Phasenlage des Fühlelementes 30 auf Null gestellt und das UND-Glied 36 durchgeschaltet. Nunmehr gelangen über das UND-Glied 36 Impulse auf den Zähler 38, und erreicht dessen Zählerstand den Inhalt des Festwertspeichers 42, so erhält man einen Meßimpuls am Ausgang des Komparators 40. Die Zeitspanne, die zwischen dem Erhalten des Startimpulses und der Abgabe des Meßimpulses verstreicht, setzt sich somit zusammen aus einer nicht von der Meßgröße abhängigen Totzeit und einer für den Istwert der Meßgröße charakteristischen Zeitspanne. Da die Steuer/ Auswerteeinheit 16 nur die Absolutlage des Meßimpulses bezüglich des Startimpulses auswertet, sieht sie die mit der monostabilen Kippstufe 44 versehene Fühleinheit effektiv als ein solche an, die verglichen mit einer Fühleinheit, welche nur die Schaltkreise 30 bis 43 umfaßt, verminderte Empfindlichkeit aufweist.

In der Praxis wird zunächst der Inhalt des Festwertspeichers 42 so gewählt, daß die Schwankung in der Lage des Meßimpulses, die beim Überstreichen des gewünschten Meßbereiches der zu erfassenden Meßgröße erhalten wird, etwas kleiner ist als das Standardfenster $f_i = d$. Bei so bestimmtem Inhalt des Festwertspeichers 42 liegt dann in der Regel die Mitte des Schwankungsbereiches vor der Fenstermitte, und um den Meßimpuls wieder zur Fenstermitte zu schieben, wird an die meßgrößenabhängige, durch Empfindlichkeitsverminderung zu kurz gewordene Zeitspanne eine meßgrößenunabhängige Grundzeit hinzuaddiert, wozu der Inhalt des Hilfs-Festwertspeichers 54 entsprechend eingestellt wird.

Man erkennt, daß die Schaltung nach Figur 4 im Prinzip eine Hintereinanderschaltung einer unabhängig von der Meßgröße arbeitenden monostabilen Kippstufe und einer monostailen Kippstufe mit von der Meßgröße abhängiger Periode darstellt. Es versteht sich, daß man die Reihenfolge dieser Kippstufen auch vertauschen kann, ohne daß sich das Ergebnis ändert.

Durch Vorsehen der monostabilen Kippstufe 44 läßt sich so mit die Empfindlichkeit eines Fühlers 24 an ein vorgegebenes Meßfenster f anpassen.

Wichtig ist bei dieser Anpassung, daß sie ohne jede physikalische Beeinflussung des Sensors 32 erfolgt, so daß die eigentliche Sensorkennlinie unverändert bleibt, und daß auch keine Änderungen im oder am Umsetzer 34 vorgenommen werden müssen. Die Einstellung läßt sich auch sehr feinfühlig dosieren und in weiten Grenzen rasch einstellen, es brauchen hierzu nur die Inhalte der beiden Festwertspeicher 42 und 54 abgeändert zu werden. Dies läßt sich einfach bewerkstelligen, wenn diese Festwertspeicher Schreib/Lesespeicher sind. Auch bei Verwendung eines PROM, EPROM oder EEPROM läßt sich die Anpassung sehr einfach durchführen. Wo auf eine Empfindlichkeitseinstellung ohne physikalischen Eingriff in den Fühler 24 kein besonderer Wert gelegt wird, kann man auch zur Realisierung der Festwertspeicher Widerstands-oder Drahtbrückenanordnungen verwenden, aus denen dann jeweils geeignete der Widerstände oder Drahtbrücken herausgeschnitten werden.

Wie aus der vorstehenden Beschreibung der Einstellung der Speicherinhalte der Festwertspeicher 42 und 54 ersichtlich, sind diese Speicherinhalte nicht voneinander unabhängig. Man kann die Einstellung daher auf die Einstellung eines einzigen Festwertspeichers reduzieren, wobei der Einfachheit halber zunächst angenommen sei, daß der Oszillator 46 eine Frequenz bereitstellt, wie sie das Fühlelement 30 bei der Mitte des zu erfassenden Meßbereiches erzeugt. Wie in Figur 4 gestrichelt angedeutet, kann man dann einen ersten Festwertspeicher 62 vorsehen, der ein elektrisches Signal enthält, welches der Standard-Fensterbreite $f_i = d$ entspricht. Ein zweiter Festwertspeicher 64 enthält ein elektrisches Signal, welches charakteristisch ist für die Herabsetzung der Fühlerempfindlichkeit in solchem Ausmaße, daß die Lageschwankung des Meßimpulses stets kleiner ist als das Meßfenster. Grob gesprochen ist der Inhalt des Festwertspeichers 64 somit der Länge der Periode de monostabilen Kippstufe 44 zugeordnet: je stärker die Empfindlichkeit des Fühlelementes 30 vermindert werden muß, umso größer muß die Periode der monostabilen Kippstufe 44 sein. Der Festwertspeicher 64 kann somit anstelle des Festwertspeichers 54 an den Hilfskomparator 52 angeschlossen werden. Die Ausgangssignale der beiden Festwertspeicher 62, 64 werden ferner auf die beiden Eingänge eines Subtrahierkreises 66 gegeben, dessen Ausgangssignal anstelle des Ausgangssignales des Festwertspeichers 42 auf den Komparator 40 gegeben wird.

Bei dem abgewandelten Fühler 24' nach Figur 5 erzielt man die Empfindlichkeitsverminderung für das Fühlelement 30 dadurch, daß man dessen meßgrößenabhängige Ausgangsimpulse mit von der Meßgröße unabhängigen Impulsen "verdünnt".

Hierzu werden die scharfen Ausgangsimpulse des Fühlelementes 30 auf den einen Eingang eines ODER-Gliedes 68 gegeben, dessen anderer Eingang von einem freilaufenden Oszillator 70 her mit scharfen Impulsen beaufschlagt ist. Dessen Arbeitsfrequenz ist durch ein externes Element einstellbar, welches als einstellbarer Widerstand 72 gezeigt ist.

Die am Ausgang des ODER-Gliedes 68 enthaltenen Impulse gelangen über ein UND-Glied 74 auf den Zähleingang C eines Zählers 76. Dessen Datenausgangsklemmen DO sind mit einem Komparator 78 verbunden, der von einem Festwertspeicher 80 her ein Referenzsignal erzeugt. Die Schaltkreise 76 bis 80 bilden wieder einen einstellbaren Frequenzteiler.

Der zweite Eingang des UND-Gliedes 74 ist mit der "1"-Ausgangsklemme einer bistabilen Kippschaltung 82 verbunden. Deren Setzklemme S ist mit dem von der Steuer/Auswerteeinheit 16 bereitgestellten Startsignal beaufschlagt, welches auch wieder die Phasenlage des Fühlelementes 30 und des Oszillators 70 einstellt. Das Rückstellen der bistabilen Kippschaltung 82 erfolgt durch das Ausgangssignal des Komparators 78, das zugleich auch das Ausgangssignal des Fühlers 24 darstellt.

Erhöht man die Arbeitsfrequenz des Oszillators 70, so würde bei unverändertem Inhalt des Festwertspeichers 80 das Ausgangssignal des Komparators 78 rascher erhalten. Um eine gewünschte Mitte des Meßfensters zu gewährleisten, bei welchem der Meßimpuls bei mittlerem Wert der Meßgröße erhalten wird, muß somit der Inhalt des Festwertspeichers 80 hochgefahren werden. Dieses Hochsetzen des Inhaltes des Festwertspeichers 80 in Abhängigkeit von der Arbeitsfrequenz des Oszillators 70 kann automatisch derart erfolgen, daß man das Ausgangssignal des einstellbaren Widerstandes 72 auch auf einen Digital/Analogwandler 84 gibt, dessen Ausgangssignal dann zum Adressieren des Festwertspeichers 80 verwendet wird, in welchem verschiedene, unterschiedlich großes Teilverhältnis des durch die Schaltkreise 76 bis 80 gebildeten Frequenzteilers vorgebende Signale abgelegt sind.

Arbeitet der Oszillator 70 mit sehr hoher Frequenz und ist entsprechend der Inhalt des Festwertspeichers 80 eine große Zahl, so tragen offensichtlich die vom Fühlelement 30 abgegebenen von der Meßgröße abhängigen Impulse nur wenig zur Bildung des Ausgangssignales des Komparators 78 ab; die Empfindlichkeit des Fühlelementes 30 ist somit stark herabgesetzt. Arbeitet dagegen der Oszillator 70 mit nur geringer Frequenz, so wird der Inhalt des Festwertspeichers 80 auf einen kleinen Wert gesetzt, und die Phasenlage des vom Komparator 78 abgegebenen Meßimpulses schwankt stark in Abhängigkeit von der Frequenz der vom Fühlelement 30 abgegebenen Impulse. Auch hier läßt sich eine feine Einstellung der Empfindlichkeit des Fühlers 24 über einen großen Bereich hinweg ohne Eingriff in den eigentlichen Sensor 32 bewerkstelligen.

Das Ausagangssignal des Komparators 78 stößt wieder eine schnelle monostabile Kippstufe 82 an, deren Ausgangssignal den Meßimpuls darstellt. Dieses Signal wird zugleich auch zum Rückstellen der bistabilen Kippschaltung 84 verwendet, also zur Vorbereitung des Fühlers 24' für den nächsten Meß-Zyklus.

In Abwandlung der oben beschriebenen Fühler 24 und 24' kann man deren Ausgangssignale über eine Diode 88a auf den Start-Eingang zurückführen, wie in den Figuren 4 und 5 gestrichelt angedeutet. Die Fühler erzeugen dann fortlaufend Meßimpulse, deren zeitlicher Abstand ein von Leitungseinflüssen unabhängiges Maß für die Meßgröße ist, welches von der Steuer/Auswerteeinheit einfach auswertbar ist. In diesem Falle wird dann auch die Periode der monostabilen Kippstufe 22 so vergrößert, daß sie mindestens zwei Perioden sämtlicher Meßimpulse beträgt.

Die in Abständen von der Steuer/Auswerteeinheit abgegebenen Startimpulse stellen die verschiedenen Zähler und Frequenzteiler der Fühler 24 bzw. 24' zusätzlich zurück, sodaß auf jeden Fall zu Beginn eines neuen Meßzyklus eine Phasensynchronisierung der verschiedenen Fühleinheiten erfolgt, egal wie groß der Istwert der erfaßten Meßgröße ist. Eine Sperrdiode 88b verhindert, daß die Meßimpulse auf den Fühler-Starteingang zurückgelangen, von wo aus sie die monostabile Kippstufe 22 neu anstoßen könnten. Die Dioden 88a und 88b bilden im Effekt zusammen ein ODER-Glied, über welches die Start-oder Synchronisierungsschiene des Fühlers von der Sende/Empfangsweiche 18 bzw. vom Fühlerausgang her beaufschlagt werden kann.

Figur 6 zeigt Einzelheiten eines Verzögerungsgliedes 26, welches meßwertunabhängig arbeitet, wie schon weiter oben dargelegt.

Ein Zähler 90, ein Komparator 92 und ein einstellbarer Festwertspeicher 94 bilden wieder zusammen einen einstellbaren Frequenzteiler, der eingangsseitig über ein UND-Glied 96 mit einer konstanten Frequenz beaufschlagt ist, die z.B. vom Hilfsoszillator 46 bzw. 70 abgenommen werden kann. Das Durchschalten des UND-Gliedes 96 besorgt das "1"-Ausgangssignal einer bistabilen Kippschaltung 98, deren Setz-Eingang S mit dem Eingang des Verzögerungsgliedes verbunden ist, also die vom Fühler 24 bzw. 24' abgegebenen Impulse erhält. Diese Impulse werden über ein UND-Glied 100 auch auf die Rückstellklemme R des Zählers 90 gegeben, welches am anderen Eingang das "0"-Ausgangssignal der bistabilen Kippschaltung 98 erhält. Das Rückstellen der bistabilen Kippschaltung 98 erfolgt durch das Ausgangssignal des Verzögerungsgliedes, das von einer schnellen monostabilen Kippstufe 102 bereitgestellt wird, deren Eingang mit dem Ausgang des Komparators 92 verbunden ist und deren Ausgang zugleich den Ausgang des Verzögerungsgliedes darstellt. Man erhält so für jeden Eingangsimpuls einen um eine über den Inhalt des Festwertspeichers 94 vorgebbare Zeitspanne verzögerten Ausgangsimpuls.

## Ansprüche

1. Fühleinheit, die nach Erhalt eines Startimpulses jeweils mindestens einen Meßimpuls erzeugt, wobei der zeitliche Abstand zwischen Startimpuls und einem Meßimpuls oder der Abstand aufeinanderfolgender Meßimpulse dem Istwert der zu erfassenden Meßgröße zugeordnet ist, mit einem Fühlelement, welches Impulse mit dem Istwert der Meßgröße zugeordneter Frequenz bereitstellt, mit einem dem Fühlelement nachgeschalteten Frequenzteiler und mit einer zwischen Fühlelement und Frequenzteiler eingefügten Torschaltung, die nach Erhalt eines Startimpulses durchgeschaltet wird, dadurch gekennzeichnet, daß ein mit fester Frequenz arbeitender Hilfsoszillator (46; 70) vorgesehen ist, dessen Ausgangsimpulse mit den Fühlelement-Ausgangsimpulsen derart kombiniert werden, daß der Schwankungsbereich der Lage des Meßimpulses ($m_i$) um einen Lagemittelwert ($t_0 + d_i$) betragsmäßig kleiner ist als ein Standardfenster ($f_i = D$).

2. Fühleinheit nach Anspruch 1, dadurch gekennzeichnet, daß durch den Startimpuls (s) oder einen zuvor erzeugten Meßimpuls ($m_i$) eine in Abhängigkeit vom Hilfsoszillator (46) arbeitende Zeitstufe (44) angestoßen wird, durch deren Ausgangssignal die Fühlelement-Torschaltung (36) und der dem Fühlelement (30) nachgeschaltete Frequenzteiler (38 bis 42) aktiviert werden, und daß dieser Frequenzteiler (38 bis 42) ein vorgebbares Teilverhältnis hat.

3. Fühleinheit nach Anspruch 2, dadurch gekennzeichnet, daß die Zeitstufe (44) einen mit den Ausgangsimpulsen des Hilfsoszillators (46) beaufschlagten Hilfsfrequenzteiler (50 bis 54) aufweist, durch dessen Ausgangssignal die Fühler-Torschaltung (36) und der dem Fühlelement (30) nachgeschaltete Frequenzteiler (38 bis 42) aktiviert werden, wobei der Zeitstufen-Frequenzteiler vorzugsweise einen mit dem Ausgangssignal des Hilfsoszillators (38) beaufschlagten Hilfszähler (50), einen einstellbaren Speicher (54) und einen mit den Ausgangssignalen von Hilfszähler (50) und Speicher (54) beaufschlagten Komparator (52) aufweist, der das Ausgangssignal des Zeitstufen-Frequenzteilers bereitstellt.

4. Fühleinheit nach Anspruch 2 oder 3, dadurch gekennzeichnet, daß der dem Fühlelement (30) nachgeschaltete Frequenzteiler einen mit den Fühlelement-Ausgangsimpulsen beaufschlagten Zähler (38), einen das Frequenz-Teilverhältnis vorgebenden Speicher (42) und einen mit dem Ausgangssignal des letzteren und dem Ausgangssignal des Fühlelementimpuls-Zählers (38) beaufschlagten Komparator (40) aufweist, wobei das Ausgangssignal des letzteren den Meßimpuls auslöst.

5. Fühleinheit nach Anspruch 3 in Verbindung mit Anspruch 4, dadurch gekennzeichnet, daß die die Teilverhältnisse der Frequenzteiler (38 bis 42; 50 bis 54) vorgebenden Speicher (42; 54) bezüglich ihres Speicherinhaltes gegensinnig gekoppelt sind.

6. Fühleinheit nach Anspruch 5, dadurch gekennzeichnet, daß eines der die Teilverhältnisse der Frequenzteiler (38 bis 42; 50 bis 54) vorgebenden elektrischen Signale von einem Rechenkreis, insbesondere Subtrahierkreis (66) bereitgestellt wird, dessen Eingänge mit den Ausgängen zweier Speicher (62, 64) verbunden ist, wobei einer der Speicherinhalte gemäß der gewünschten Empfindlichkeitsverminderung der andere gemäß der Standard-Meßfenstergröße eingestellt ist.

7. Fühleinheit nach Anspruch 1, dadurch gekennzeichnet, daß die Ausgangsimpulse des Fühlelementes (30) und des Hilfsoszillators (70) gemeinsam (68) auf den dem Fühlelement (30) nachgeschalteten Frequenzteiler (76 bis 80) gegeben werden, wobei letzterer ein einstellbares Teilverhältnis hat.

8. Fühleinheit nach Anspruch 7, dadurch gekennzeichnet, daß das Teilverhältnis des dem Fühlelement (30) nachgeschalteten Frequenzteiler (76 bis 80) in Abhängigkeit vom Ausgangssignal eines Einstellgliedes (72) des Hilfsoszillators (70) zwangsweise eingestellt wird.

9. Fühleinheit nach Anspruch 8, dadurch gekennzeichnet, daß der dem Fühlelement (30) nachgeschaltete Frequenzteiler (76 bis 80) einen mit den überlagerten (68) Impulsen von Fühlelement (30) und Hilfsoszillator (70) beaufschlagten Zähler (76), einen adressierbaren Speicher (80) zur Vorgabe des Teilverhältnisses sowie einen mit den Ausgangssignalen dieses Speichers (80) und des Zählers (76) beaufschlagten Komparator (78) aufweist, durch dessen Ausgangssignal ein Meßimpuls ($m_i$) ausgelöst wird, und daß zum Adressieren des das Teilverhältnis vorgebenden Speichers (80) ein vom Ausgangssignal des Stellgliedes (72) für den Hilfsoszillator (70) abgeleitetes (84) Signal verwendet wird.

Fig.1

Fig.2

Fig.3

BAD ORIGINAL

Fig. 4

BAD ORIGINAL

*Fig. 5*

*Fig. 6*

BAD ORIGINAL